# EUROPÄISCHE PATENTANMELDUNG

(11) **EP 1 598 978 A1**
(43) Veröffentlichungstag der Anmeldung: **23.11.2005**
(21) Anmeldenummer: 04011681.6
(22) Anmeldetag: 17.05.2004
(51) Int. Cl.: H04L 12/24

(54) **Mechanismus zur temporären Synchronisation von mehreren, parallelen Anzeigen eines Multiusersystems**

(71) Anmelder: SIEMENS AKTIENGESELLSCHAFT, 80333 München (DE)
(72) Erfinder: Huynh, Thanh-Phong, 10715 Berlin (DE); Müller, Andreas, 12683 Berlin (DE)

(57) **Zusammenfassung**

Zur Synchronisation paralleler Anzeigen auf mehreren Clients CL eines zentralen Systems OS mit elementspezifischen Daten NM dezentraler Elemente NE wird beim erstmaligen Öffnen einer Anzeige ein temporärer Synchronisationsprozess TP gestartet, bei dem alle geöffneten Anzeigen registriert werden. Änderungen der elementspezifischen Daten NM werden unter Mitwirkung des Prozess TP nach einem optionalen Verifikationsverfahren mit den Anzeigen synchronisiert.

## Beschreibung

In dem internationalen Standard M.3010 (02/2000) der ITU-T ist eine Referenzarchitektur eines Telecommunications Management Network (TMN) zur Überwachung und Steuerung eine Netzes für Telekommunikationsanwendungen beschrieben, bei der davon ausgegangen wird, dass das von dem TMN gesteuerte Netz unterschiedliche Typen von Netzelementen umfasst, die üblicherweise mit Hilfe von unterschiedlichen Kommunikationsmechanismen (d.h. Protokollen, Meldungen, Management Informationen - auch Objektmodell genannt) gesteuert werden.

Dieses TMN umfasst folgende Funktionalitäten:
- Operations Systems Function (OSF), die das "eigentliche" Management des Telekommunikationsnetzes realisiert.
- Workstation Function (WSF), die zur Darstellung der Steuervorgänge und des Netzzustandes für einen menschlichen Anwender des TMN dient.
- Network Element Function (NEF), die eine Schnittstelle zur Steuerung der Telekommunikations-Funktionen der Netzelemente darstellt. Die Schnittstelle definiert den spezifischen Kommunikationsmechanismus des jeweiligen Netzelements, der ggf. nicht standardisiert ist. Die Summe aller Management Informationen des NE wird als Management Information Base (MIB) des NE bezeichnet. Sie wird im weiteren auch NE-MIB genannt.
- Transformation Function (TF), die zur Verbindung von Komponenten mit unterschiedlichen Kommunikationsmechanismen und insbesondere zur Anbindung von Netzelementen, die keine standardisierte NEF aufweisen, an das TMN eingesetzt wird. Sie wird in dem Standard M.3010 (05/96) auch als Mediation Function bzw. als Q-Adaption Function bezeichnet.

Physikalisch ist die Funktion NEF üblicherweise in einem Netzelement (NE) angeordnet, während die Funktionen OSF und WSF üblicherweise in einem so genannten Operations System (OS) realisiert sind. Zwischen NE und OS kann ein Data Communication Networks (DCN) zur Übermittlung von Informationen vorgesehen sein. Die Übermittlung folgt den Prinzipien des Transportdienstes, so wie er in den unteren vier Schichten des ISO/OSI Referenzmodells im internationalen Standard X.200 beschrieben ist.

Die einzelnen TMN Funktionen werden in zeitgemäßen TMN Systemen üblicherweise von funktionsspezifischen Programmen bewirkt. Sie werden von Hardware (z.B. Prozessor, i/o Baugruppe) ausgeführt, die in den Einrichtungen vorgesehen ist. Diese Ausführung wird von Supportsoftware (z.B. Multitasking bzw. Multithreading Betriebssystem, Datenbanksystem, Windows System) unterstützt.

Üblicherweise ist einem OS jeweils eine Vielzahl von NE zugeordnet. Dabei ist das OS meist zentral angeordnet, während die NE in dem Netz dezentral auf eine Vielzahl von Standorten verteilt sind.

Die Leistungsfähigkeit der TMN Funktionen hängt von einer Vielzahl unterschiedlicher Faktoren ab. Sie wird nicht nur durch die Implementierung der funktionsspezifischen Programme bestimmt, sondern auch durch das Zusammenspiel der genannten Systemkomponenten mit den funktionsspezifischen Programmen sowie durch die zeitliche und räumliche Verteilung der Interaktionen und Daten zwischen den unterschiedlichen TMN Funktionen.

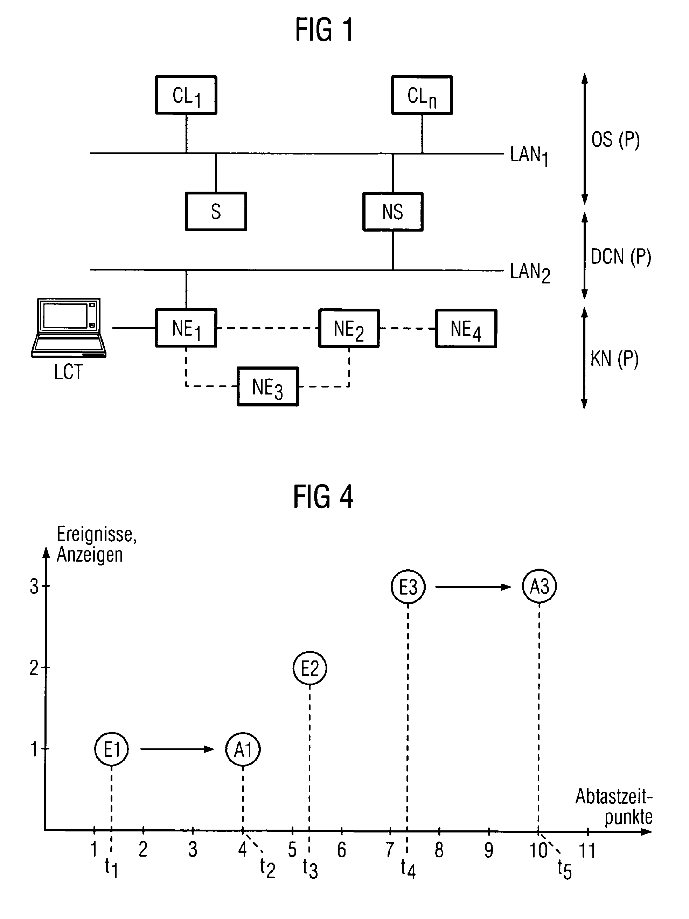

In Figur 1 ist in einem Blockschaltbild eine beispielhafte Anordnung eines zeitgemäßen, zentralen TMN Systems zur im Multiuserbetrieb durchgeführten Steuerung einer Vielzahl von dezentralen Netzelementen NE eines Kommunikationsnetzes KN dargestellt. Diese Anordnung umfasst folgende Komponenten:
- Clients (CL)
- Server (S)
- NetServer (NS)
- Netzelemente (NE)
- Local Craft Terminal (LCT)

Die Clients enthalten jeweils eine Workstation Function WSF und dienen der Anzeige des aktuellen Netzzustandes. Außerdem wird an dieser Stelle das Netz vom Operator gesteuert.

Der Server enthält die Operations System Function OSF.

Der NetServer bedient zur Optimierung der Systemperformance eine Schnittstelle zu den Netzelementen. Er sendet Kommandos, z.B. Konfigurationsbefehle, an die NE's bzw. empfängt Daten von den NE's und sendet diese an den Server bzw. die Clients weiter.

Die Netzelemente des von dem OS gesteuerten Kommunikationsnetzes dienen zur Realisierung von Diensten des Netzes, z.B. der Übertragung von Nutzdaten. Zu ihrer Steuerung und Überwachung enthalten sie jeweils eine Network Element Function NEF mit einer netzelementspezifischen MIB.

Infolge der starken Verteiltheit des Systems werden in dem OS zur Steigerung der Systemperformance zumindest teilweise Kopien von Daten der NE-MIB gespeichert, z.B. wenn auf diese innerhalb des OS erheblich schneller zugegriffen werden kann als auf die originalen Daten der NE-MIB in den Netzelementen. Diese Kopien werden üblicherweise in einer Datenbank des Servers gespeichert. Sie können allerdings auch in den Clients oder in dem NetServer geführt werden. Die im OS vorgesehenen Kopien von Daten der NE-MIB werden im weiteren auch als OS-MIB bezeichnet.

Die hohe Komplexität des Systems verdeutlicht ein beispielhafter Informationsfluss zwischen den genannten Systemkomponenten bei einer Kommandoeingabe an einem Client:
1. Der Operator gibt sein Kommando an der grafischen Benutzeroberfläche des Client ein. Die Kommandoinformation wird an den Server weitergeleitet.
2. Der Server führt gegebenenfalls Änderungen in der lokalen Datenhaltung durch und leitet die Operatoranforderung an den NetServer weiter.
3. Der NetServer erreicht das oder die betroffenen NE's über das zwischengeschaltete DCN.
4. In den betroffenen Netzelementen wird die erwünschte Änderung durchgeführt.
5. Von den NE's wird ein neuer Status über den NetServer an den Server übertragen. Dabei werden eventuell wieder Änderungen an der internen Datenhaltung im Server vorgenommen .
6. Von dem Server werden die von der Änderung betroffenen Clients unterrichtet.

Im Zuge dieses Informationsflusses werden die betroffenen Daten der OS-MIB automatisch mit den originalen Daten der NE-MIB synchronisiert. Darüber hinaus ist bei Verwendung einer OS-MIB in dem OS eine komplexere Funktion zur Synchronisation der OS-MIB mit der NE-MIB vorgesehen, wenn die Aktualität der OS-MIB auch dann gegeben sein soll, wenn für längere Zeit keine automatische Aktualisierung der Daten der OS-MIB im Zuge von Kommandoeingaben erfolgt. Dies ist erforderlich, wenn Änderungen der NE-MIB von den NE's nicht mitgeteilt werden oder mitgeteilte Änderungen nicht in die OS-MIB eingearbeitet werden, weil sie innerhalb des OS nicht entsprechend weitergeleitet und bearbeitet werden. Dies ist beispielsweise bei relativ neuen oder seltener abgefragten Daten der Fall, weil in diesen Fällen die aufwändige Weiterleitung und Bearbeitung im OS entweder aus zeitlichen Gründen noch nicht realisiert oder aus wirtschaftlichen Gründen nicht vorgesehen ist. In diesen Fällen steigt die Wahrscheinlichkeit einer Asynchronität zwischen OS-MIB und NE-MIB mit der Lebensdauer der OS-MIB kontinuierlich an.

Die erforderliche Synchronisation kann beispielsweise manuell mit Hilfe von Update Buttons in den einschlägigen Fenstern der WSF erfolgen. Wenn dieser Button von dem Operator betätigt wird, dann fordert der Client über den Server und/oder NetServer bei allen beteiligten Netzelementen die aktuellen Daten ab. Diese werden von den NE's über das DCN zum OS übertragen, aufbereitet und an die Clients weitergeleitet. Daraufhin wird der Inhalt der Fenster der WSF aktualisiert und der Operator hat synchronisierte, d.h. zeitnah aktuelle Informationen auf dem Bildschirm.

Die Synchronisation kann auch dadurch bewirkt werden, dass ständig neu und ununterbrochen die Daten der OS-MIB über das DCN von den NE's abfragt werden (Polling). Die NE's geben bei jedem Polling alle abgefragten Daten über das DCN an das OS und dessen Clients weiter. Damit sind auf der OS-MIB basierende Fenster, die der Operator sieht, immer zeitnah aktuell zu allen Änderungen in den NE-MIB's.

Nach dem bislang Ausgeführten wird klar, dass die Umsetzung der beschriebenen Architektur in konkrete Lösungen infolge der ausgeprägten Verteiltheit des Systems und der Vielzahl an unterschiedlichen Systemkomponenten und -Anforderungen eine hochgradig komplexe technische Problemstellung darstellt.

Es ist Aufgabe der Erfindung, zumindest eines der bestehenden Probleme zu erkennen und durch Angabe von zumindest einer Lehre zum technischen Handeln zu lösen.

Die Erfindung beruht auf folgenden Erkenntnissen:
- Bei der Synchronisation mit einem Update Mechanismus muss der Update an jedem Client separat durchgeführt werden. Bei jeder dieser Aktionen wird der gesamte Informationsfluss vom Client zu den NE's und zurück durchlaufen. Sobald ein Operator an irgendeinem Client oder ein Operator an einem LCT eine Änderung der Daten in den NE's vornimmt, sind die an einem Client angezeigten Informationen nicht mehr aktuell. Der Operator erhält keinen Hinweis über die Gültigkeit der angezeigten Informationen. Er muss deshalb den Update wiederholt ausführen, wenn die angezeigten Informationen möglichst aktuell sein sollen. Diese Updates verursachen Lastspitzen an allen im Informationsfluss befindlichen Komponenten des Gesamtsystems, was zu Instabilitäten des Systems führen kann.
- Bei der Synchronisation mit Polling Mechanismus werden alle Komponenten des Systems vom Client über das OS, das DCN und die NE's mit einer dauerhaften Last belegt.
- Desweiteren werden bei dem Polling Mechanismus infolge des kontinuierlichen Abfragens per definitionem auch temporäre Zwischenkonfigurationen, die im Rahmen von an einem der Clients oder an einem LCT eingegeben Umkonfigurationen eines NE's auftreten, an allen Clients angezeigt, die dieses NE ebenfalls darstellen. Dies ist unerwünscht, da diese Zwischenzustände oft keine sinnvollen Konfigurationen darstellen. Dieses Problem tritt auch bei dem Update Mechanismus auf, auch wenn dort durch den fehlenden Abfrageautomatismus die Darstellung von temporären Zwischenkonfigurationen nur dann erfolgt, wenn der Update zu einem entsprechenden Zeitpunkt angestoßen wird.
- Die Einarbeitung von mitgeteilten Änderungen in die OS-MIB hängt davon ab, wo und wie die OS-MIB gespeichert ist. Eine Aktualisierung ist üblicherweise dann gegeben, wenn die OS-MIB einen Einarbeitungsmechanismus umfasst. Die Einarbeitung erfolgt dabei stets dauerhaft, d.h. unabhängig davon, ob Fenster geöffnet sind oder nicht, damit jederzeit eine synchrone OS-MIB vorliegt. Auf diese Weise kann z.B. im OS ein dauerhaftes Logging unabhängig von der Existenz von Fenstern realisiert werden. Sofern Fenster geöffnet werden, können jederzeit aktuelle Daten aus der OS-MIB geliefert werden. Bei zentralisierter Speicherung können zudem alle offenen Fenster der WSF über Änderungen der OS-MIB informiert werden.
- Es gibt Szenarien, in denen diese Infrastruktur mit einer dauerhaft synchronisierten OS-MIB auf dem Server nicht gegeben ist, weil deren Realisierung vergleichsweise aufwändig ist. Eine vergleichsweise günstigere Alternative besteht dann darin, die OS-MIB in die WSF zu verlagern, indem einzelne Daten aus der NE-MIB unmittelbar, d.h. nicht auf aktuell gespeicherten Daten aus der Datenbank des Servers basierend, an die WSF durchgereicht werden. Werden solche Informationen vom Operator an einem Client abgerufen, müssen diese Daten von den NE's abgerufen und im OS aufbereitet werden, bevor sie an dem Client des Operators angezeigt werden können.
   Wird nach Erkenntnis der Erfindung in diesem Szenario jedoch an einem anderen Client oder an einem Local Craft Terminal (LCT) die Konfiguration des NE's geändert, so wird der Inhalt des Fensters an dem Client des Operators nicht aktualisiert. Der Grund ist, dass diese Daten und deren Status nicht im Server gespeichert und deshalb auch nicht automatisch in Richtung Client aktualisiert werden.
   Der Operator bekommt folglich ab diesem Zeitpunkt nicht die aktuellen, sondern veraltete Daten angezeigt. Das kann dazu führen, dass nachfolgende Aktionen des Operators auf Grund falscher Annahmen ausgeführt werden.

Eine Lösung für diese erfindungsgemäß erkannte Problemsituation sowie vorteilhafte Ausgestaltungen dieser Lösung sind in den Patentansprüchen angegeben.

Mit dieser Lösung ist eine Vielzahl von Vorteilen verbunden, die in den Ausführungsbeispielen der Erfindung beschrieben werden.
- Durch die temporäre Kopplung eines Synchronisationsprozesses mit der Existenz mindestens eines offenen Fenster wird für Fenster, die nicht auf einer dauerhaft synchronisierten OS-MIB sondern auf einer fensterspezifischen OS-MIB ohne Zugriff auf mitgeteilte Änderungen basieren, bewirkt, dass Informationen, die Operatoren an den Clients des Managementsystems zur Entscheidungsfindung benötigen, mit Einsatz unserer Erfindung immer auf aktuellen Daten basieren und nicht die Gefahr besteht falsche Entscheidungen zu treffen, die auf veralteten Daten beruhen. Dadurch werden Fehler in der Konfiguration der NE vermieden.
- Die Operatoren werden von zusätzlicher unnötiger Arbeit entlastet, wenn sie nicht durch manuelles Aktualisieren der Anzeige durch Betätigen eines Update Buttons für die Aktualität der Anzeige sorgen müssen. Dieser Vorteil ist besonders schön, wenn mehrere Operatoren an einem System arbeiten, weil dann die Entlastung von unnötiger Arbeit gleich mehrere Personen betrifft.
- Durch die Registrierung bei dem temporären Synchronisationsprozess wird eine automatische Aktualisierung der Informationsfenster auf den Clients bei jeder das Fenster betreffenden Änderung für alle Operatoren unterstützt. Dadurch können die Operatoren Konfigurationen ändern die automatisch auf allen Clients sichtbar werden. Dabei ist es unerheblich wie viele User an den Konfigurationen arbeiten und wie viele User die Informationsfenster geöffnet haben. Alle Operatoren haben immer die gültigen und gleichen Informationen automatisch zur Verfügung.
- Eine prozessspezifische OS-MIB hilft, das Öffnen der Fenster zu beschleunigen, da nur beim Öffnen des ersten Fensters eine Abfrage der NE-MIB zum erstmaligen, temporären Aufbau der prozessspezifischen OS-MIB erforderlich wird.
- Durch die wiederholten Abfragen zur Synchronisation der prozessspezifischen MIB mit der zugehörigen NE-MIB werden Lastspitzen vermieden und eine gleichmäßigere bzw. geringere Last für die Systemkomponenten erzeugt, wodurch die Systemstabilität gesteigert wird.
   Bei Synchronisation mit Polling wird eine sehr gleichmäßige Verteilung der Systemlast erreicht, wodurch die einzelnen Lasten vergleichsweise gering ausfallen. Der temporäre Synchronisationsprozess kann deshalb beispielsweise auf dem Server zum Ablauf kommen, wenn dieser die zusätzliche geringe Last ohne weiteres aufbringen kann. Die erforderliche Leistung des Systems kann gut geplant werden, Lastspitzen treten nicht auf, da die Operatoren nicht durch Drücken des Update Buttons Lastspitzen erzeugen können.
   Bei Synchronisation mit Watching und Verarbeitung von empfangenen Meldungen werden noch weniger Ressourcen beansprucht, da hier Meldungen, die automatisch von den NE's gesendet wurden, ausgewertet werden und folglich kein Abfragen erforderlich werden. Sofern die Verarbeitung als Weiterleitung zu den fensterspezifischen OS-MIB ausgebildet ist, kann der temporäre Synchronisationsprozess sogar auf dem NetServer zum Ablauf kommen.
- Bei einer verzögerten Mitteilung von Änderungen an die Fenster wird die Anzeige an den Clients erst aktualisiert, wenn ein stabiler, konfigurierter Zustand eingetreten ist. Insbesondere werden Zustände in den Netzelementen, die sich in sehr kurzen Abständen ändern und die für den Operator nicht relevant sind bzw. zu Fehlinterpretationen führen können, durch einen Verifizierungsvorgang gefiltert. Dieser Fall ist z. B. gegeben, wenn mehrere Operatoren gleichzeitig Konfigurationsänderungen vornehmen, die ohne Filterung innerhalb von kurzer Zeit in allen registrierten Informationsfenstern dargestellt würden,
   Die Verzögerung wird sehr effektiv bewirkt, wenn mehrmals abgefragt und miteinander verglichen wird. Nur wenn mehrere Abfragen identische Daten liefern, werden die Informationsfenster aktualisiert. Die Anzeige von temporären Zwischenkonfigurationen, die keine sinnvolle Konfiguration darstellen, wird dadurch sehr effizient vermieden.
- Besonders schöne Vorteile sind mit unverzögert gesendeten, schlichten Mitteilungen über Änderungen der OS-MIB an die Fenster verbunden, weil infolge der fehlenden Spezifikation der Änderung die Mitteilung sehr kurz ist und das OS besonders gering belastet. Bei Empfang der Mitteilung können daraufhin in den Fenstern die dargestellten Daten als potentiell nicht mehr aktuell gekennzeichnet werden. Auch kann temporär ein Update Button aktiviert werden, mit dem selektiv ein vorzeitiger Update der geänderten, prozessspezifischen OS-MIB angefordert werden kann.
- Die Erfindung ist nicht schwer zu realisieren bzw. zu implementieren. Die Umsetzung erfordert keine prinzipiellen Änderungen des bisherigen Standes der Technik, sondern lässt sich nachträglich als Baustein - insbesondere als modifiziertes oder zusätzliches Computerprogrammprodukt - einfügen. Der Zeitpunkt der Realisierung kann unabhängig von anderen Funktionen gewählt werden. Außerdem kann das Konzept auf beliebige Informationsfenster bzw. zu aktualisierende Komponenten angewendet werden.

Die Erfindung wird im Folgenden anhand von weiteren Ausführungsbeispielen, die auch in den Figuren dargestellt sind, erläutert. Es sei betont, dass die aufgezeigten Ausführungen der Erfindung trotz ihrer teilweise sehr detailgetreuen Darstellung lediglich beispielhafter Natur und nicht einschränkend zu verstehen sind. Es zeigt:
- Figur: 1 eine beispielhafte Anordnung, umfassend ein zentrales Operations System OS zur Steuerung von dezentralen Elementen NE eines Kommunikationsnetzes KN sowie ein Data Communication Network DCN zu deren Verbindung
- Figur 2: einen beispielhaften Ablauf des erfindungsgemäßen Verfahrens in der Anordnung nach der vorstehenden Figur
- Figur: 3 einen beispielhaften, zeitlichen Verlauf einer erfindungsgemäß, verzögerten Synchronisation von fensterspezifischen OS-MIB's
- Figur 4: einen beispielhaften Datenflussplan eines erfindungsgemäßen Computerprogrammproduktes einer derart verzögerten Synchronisation

Die Ausführungsbeispiele werden anhand der in Figur 1 dargestellten, eingangs beschriebenen Anordnung erklärt. Diese Anordnung umfasst Funktionsblöcke Operations Systems Function und Workstation Function, die zentral in einem als Operations System OS ausgebildeten Erzeugnis sowie eine Vielzahl von Funktionsblöcken, die dezentral in als Netzelemente NE ausgebildeten Erzeugnissen angeordnet sind und miteinander durch Datennetze LAN₁, LAN₂ verbunden sind. Das Datennetz LAN₂ wird in der Fachwelt auch als Data Communication Network DCN bezeichnet. Die Erzeugnisse umfassen Hardware - insbesondere Prozessoren und Speichermittel - zur Durchführung von Computerprogrammprodukten P, mit denen die Funktionen realisiert sind.

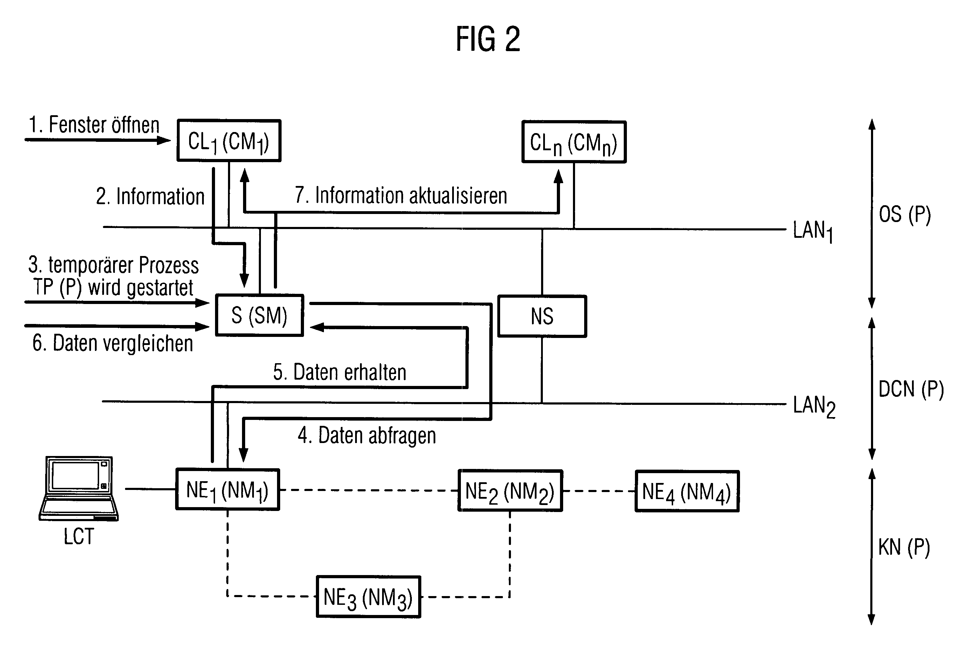

Eine erfindungsgemäße Ausführung der Erfindung ist in Figur 2 dargestellt mit einem temporären Synchronisationsprozess TP, der beispielsweise auf dem Server S angeordnet ist. Er ist aber nicht auf diese Anordnung beschränkt, sondern er könnte beispielsweise auch auf dem NetServer NS oder einem anderen, geeigneten Erzeugnis des Systems angeordnet sein. Die konkrete Anordnung hängt beispielsweise von der gegebenen Auslastung der Erzeugnisse des Systems ab. Dem Prozess TP ist auf dem Server S eine prozessspezifische OS-MIB SM zugeordnet. Mit Hilfe von Pfeilen ist der Informationsfluss zwischen den Komponenten des Systems dargestellt.

Bei dieser Ausführung mit Polling wird von einem System ausgegangen, in dem nach Konfigurationsänderungen, die von einem Client CL oder einem lokalen Bedienterminal LCT ausgelöst werden, keine Mitteilungen von den Elementen NE gesendet werden, die den geänderten Inhalt von deren NE-MIB NM enthalten.

Das Ausführungsbeispiel beginnt, wenn ein Operator ein erstes Fenster an einem Client CL öffnet und dabei Daten abfragt, die in der zentralen Steuerung OS nicht in Kopie vorliegen und deshalb von den Elementen NE abgefragt werden. Durch die Öffnung des Fensters an einem Client CL werden die angezeigten Daten CM über die zwischengeschalteten Server S und NetServer NS aus den Daten NM der betroffenen Netzelemente NE abgerufen. In diesem Zusammenhang wird auf dem Server S ein temporärer Synchronisationsprozess TP gestartet, bei dem das Fenster und alle weiteren geöffneten Fenster registriert werden. Die abgefragten Daten NM werden vorzugsweise in einer dem Prozess TP zugeordneten Datenhaltung als Daten SM zwischengespeichert, können aber auch direkt in als Daten CM in den Clients CL ohne Zwischenschaltung von Daten SM hinterlegt werden. In diesem Fall ist der Prozess TP auf die temporäre Registrierung aller geöffneten Fenster reduziert.

Damit gewährleistet ist, dass die angezeigten Daten CM auch gültig sind und ein stabiler Zustand eingetreten ist, der angezeigt werden kann, wird ein Persistence Check durchgeführt, indem die Daten NM wiederholt von den NE's abgerufen und mit den schon gespeicherten Daten SM verglichen werden. Wie oft die Daten NM von den Netzelementen NE abgefragt und mit den gespeicherten Daten SM verglichen werden sollen, kann konfigurierbar sein. Auch der zeitliche Abstand, mit dem die Daten NM abgerufen werden, kann variieren. Wenn die Daten NM von aufeinander folgenden Abfragen nicht gleich sind, erfolgt keine Aktualisierung der auf den Daten CM beruhenden Informationen auf dem Bildschirm des oder der Clients CL, da aller Voraussicht nach der Prozess des Konfigurierens, der von einem der Clients CL aus gesteuert wird, noch nicht abgeschlossen ist. Vielmehr befinden sich die abgefragten Daten NM in einem temporären Zustand, dessen Anzeige nicht erwünscht ist. Sind die Dateninhalte mehrerer aufeinander folgender Abfragen identisch, ist ein stabiler Zustand eingetreten und der oder die Clients CL mit geöffneten Informationsfenstern werden mit den aktuellen Informationen SM versorgt, die dort als Daten CM zur Anzeige kommen.

In Figur 2 ist dieses Ausführungsbeispiel mit Hilfe von Pfeilen dargestellt, die für folgende Schritte repräsentativ sind:
1. Es wird an Client CL₁ ein Fenster geöffnet.
2. Diese Aktion des Operators wird als Information an den Server S weitergeleitet.
3. Auf Grund dessen wird der Prozess TP gestartet, von dem die Datenabfrage und -auswertung durch den Server S und die Informationsaktualisierung in den Fenstern der Clients CL gesteuert wird.
4. Der Prozess P startet die Datenabfrage über den NetServer NS an die NE's.
5. Die Netzelemente NE senden ihre Daten NM über den NetServer NS an den Server S.
6. Der Server S speichert diese Daten und vergleicht sie mit ggf. schon abgespeicherten Daten SM der vorherigen Datenabfragen.
   Im Zuge des Persistence Check werden die Prozessschritte 4. bis 6. je nach Festlegung mehrmals und in definierten Zeitabständen durchlaufen werden. Je nach Ergebnis des Datenvergleichs werden die Daten NM ein weiteres Mal abgefragt. Das ist der Fall, wenn noch nicht ausreichend viele Datenabfragen erfolgt sind, die eine Verifikation zulassen oder der Datenvergleich Abweichungen zu vorherigen Daten aufweist.
7. Sind ausreichend viele Datenabfragen realisiert und der Datenvergleich hat Übereinstimmung ergeben, werden alle registrierten Clients CL, an denen das Informationsfenster geöffnet ist, mit aktuellen Informationen versorgt.

Wenn das letzte, registrierte Informationsfenster an einem Client CL geschlossen wird, wird auch der Prozess TP beendet.

Mit dieser Variante der Erfindung ist die Aktualität der angezeigten Informationen immer gewährleistet. Die Hauptlast wird durch den Server S getragen. Dabei treten keine Lastspitzen auf, sondern eine gleichmäßig niedrige Last, wodurch die Stabilität des Gesamtsystems gewährleistet wird.

In einer weiteren Ausgestaltung mit Watching läuft der Prozess TP auf dem NetServer NS ab. Dabei wird davon ausgegangen, dass nach Konfigurationsänderungen, die z.B. von einem Client CL oder einem lokalen Bedienterminal LCT ausgelöst wurden, die Netzelemente NE nach erfolgter Konfigurationsänderung eine Information an den NetServer NS schicken, die den geänderten Inhalt enthält. Diese Meldungen der Netzelemente werden mit dem Prozess TP auf dem NetServer NS ausgewertet. Damit ist keine ständige Datenabfrage bei den Elementen NE notwendig. Die entstehende Last ist wegen des Watching Verfahrens sehr gering.

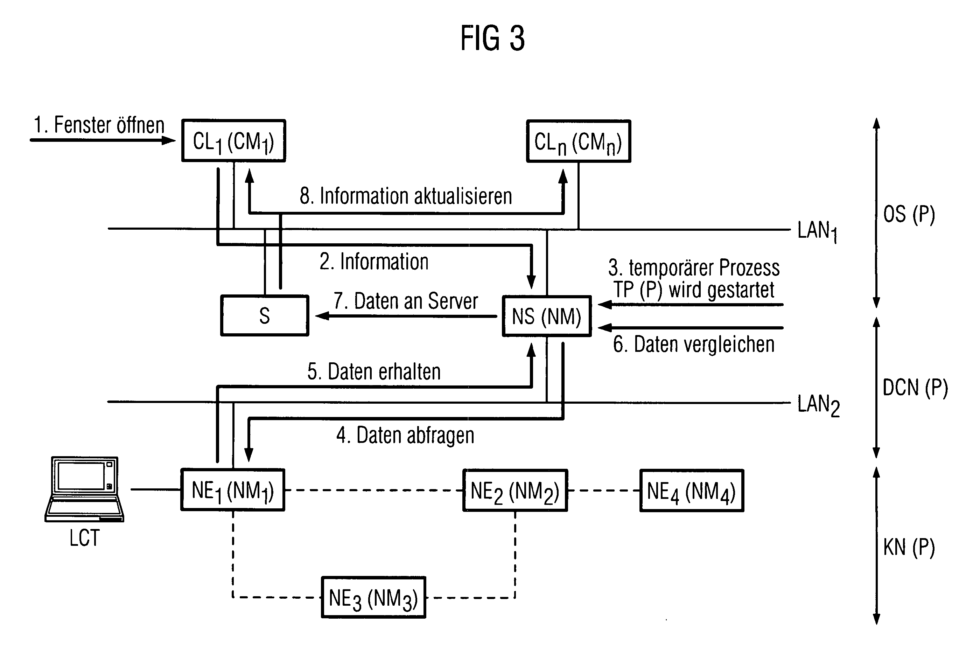

In Figur 3 ist der prinzipielle Ablauf dieses Ausführungsbeispiel mit Hilfe von Pfeilen dargestellt, die für folgende Schritte repräsentativ sind:
1. Es wird an Client CL₁ ein Fenster geöffnet.
2. Mit dem öffnen des ersten Informationsfensters wird eine Information vom Client über den Server S an den NetServer NS geschickt.
3. Auf dem NetServer NS wird ein Prozess TP gestartet.
4. Der Prozess TP fordert die für das Informationsfenster benötigten Daten NM bei den NE's ab.
5. Die erhaltenen Daten NM werden als prozessspezifische Daten SM gespeichert.
6. Um sicher zu stellen, dass kein temporärer Zustand abgefragt wurde, wird die Datenabfrage mit definiertem Zeitabstand und festgelegter Wiederholrate erneut ausgeführt.
7. Stimmen die abgefragten Daten über einen längeren Zeitraum überein, sendet der NetServer NS die aktuellen Daten SM an den Server S.
8. Dort werden sie als Daten CM zur Anzeige aufbereitet, an alle, mittlerweile registrierten Anzeigen gesendet und an den Clients CL aktualisiert. Alternativ kann die Aufbereitung auch unmittelbar in den Clients CL, d.h. ohne Mitwirkung des Prozesses TP oder der Server S/NS erfolgen.

Nach dem einmaligen Durchlaufen dieser Prozessschritte wertet der auf dem NetServer NS angeordnete Prozess TP Änderungsmeldungen der Netzelemente NE aus. Wird eine Änderung von Daten, die für das geöffnete Informationsfenster relevant sind erkannt, werden diese Daten zur Erhöhung der Sicherheit durch mehrmalige Datenabfrage bei den Netzelementen NE verifiziert. Sind die Daten von aufeinander folgenden Datenabfragen nicht identisch, ist der Zustand temporär. Sind die Daten von aufeinander folgenden Datenabfragen identisch, wird der Server S mit den aktuellen Daten SM versorgt und dieser aktualisiert die Anzeige der Informationsfenster auf den Clients CL. Wenn der letzte Client CL das Informationsfenster schließt, wird auch der Prozess P beendet.

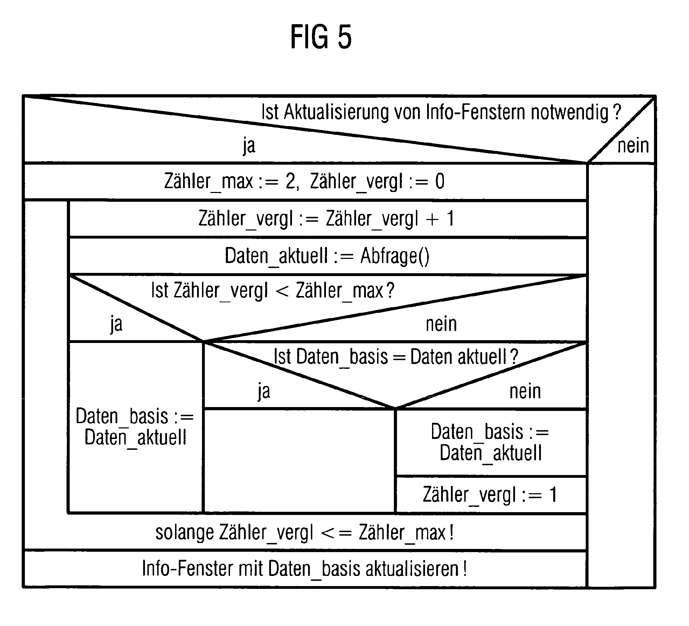

In Figur 4 ist ein beispielhafter Persistence Check ausgeführt, bei dem davon ausgegangen wird, dass der Persistence Check durch dreimaligen Vergleich von Daten realisiert wird. Führt ein Ereignis E1 zu einem Zeitpunkt t₁ zu einer Konfigurationsänderung in einem Netzelement NE, so wird diese Änderung einem Persistence Check unterzogen, bevor sie an den Graphic User Interface (GUI) angezeigt wird. Das bedeutet in dem Beispiel, dass zu den Abtastzeitpunkten 2, 3 und 4 die anzuzeigenden Daten von den Elementen NE abgefragt, durch die auswertende Einheit (Server S oder NetServer NS) gespeichert und verglichen werden. Wenn diese Daten identisch sind, werden zum Zeitpunkt t₂ die Daten übernommen und die Anzeige der Informationsfenster an den GUI's aktualisiert (A1). Wird zu dem Zeitpunkt t₃ eine Änderung der im Informationsfenster anzuzeigenden Daten in einem Element NE vorgenommen, beginnt auch hier die Verifikation der Daten. Zu den Zeitpunkten 6 und 7 werden identische Daten empfangen. Durch das Ereignis E3 wird allerdings eine neue Konfiguration vorgenommen, die bewirkt, dass zum Abtastzeitpunkt 8 veränderte Daten empfangen werden. Deshalb wird der Zustand, der durch E2 eingestellt wurde, nicht in den Informationsfenstern angezeigt, sondern die Anzeige A1 beibehalten. Die Daten, die zum Abtastzeitpunkt 8 empfangen wurden, werden durch die Abfragen zu den Zeitpunkten 9 und 10 verifiziert. Da zu den Zeitpunkten 8, 9 und 10 identische Daten empfangen, gespeichert und verglichen wurden, ist ein stabiler Zustand eingetreten der angezeigt werden soll. Deshalb werden zum Zeitpunkt t₅ alle offenen Fenster aktualisiert und mit den zum Zeitpunkt t₅ vorhandenen Informationen versorgt (A3).

In Figur 5 ist ein Vorschlag einer programmtechnischen Lösung ausgeführt. Die Anzahl der Verifikationen ist konfigurierbar und in der Variablen "Zähler_max" gespeichert. Durch die Funktion "Abfrage()" werden die Daten von den Netzelementen abgefragt und in der Variablen "Daten_aktuell" gespeichert. Die Variable "Daten_basis" dient dem Datenvergleich zwischen zuvor gespeicherten Daten SM ("Daten_basis") und aktuell abgefragten Daten NM ("Daten_aktuell"). Sind die gespeicherten Daten SM im Beispiel in Figur 5 zweimal verifiziert worden, werden die entsprechenden Informationsfenster mit dem Inhalt der Variablen "Daten_basis" aktualisiert.

Mit der Erfindung wird somit sichergestellt, dass die angezeigten Informationen immer aktuell sind, keine temporären Zwischenstände zur Anzeige kommen, die einzelnen Komponenten des Gesamtsystems nur in geringem Maße belastet werden und damit die Stabilität des Gesamtsystems gewährleistet ist.

Abschließend sei darauf hingewiesen, dass die Beschreibung der für die Erfindung relevanten Komponenten des Systems grundsätzlich nicht einschränkend in Hinblick auf eine bestimmte physikalische Realisierung oder Zuordnung zu verstehen ist. Für einen einschlägigen Fachmann ist insbesondere offensichtlich, dass alle Funktionseinheiten teilweise oder vollständig in Software / Computerprogrammprodukten und/oder über mehrere physikalische Einrichtungen verteilt realisiert werden können.

## Patentansprüche

1. Verfahren zur zentralen Steuerung von Elementen (NE) eines verteilten Systems, mit
- einer Vielzahl von einer zentralen Steuerung (OS) zugeordneten Bedienterminals (CL) zur Steuerung der Elemente im Multiuserbetrieb,
- zumindest einer elementspezifischen NE-MIB (NM) zur Steuerung des zugeordneten Elements,
- einem Fenster - insbesondere einem Informationsfenster -, in dem Daten aus der NE-MIB dargestellt werden und das mehrfach an den Bedienterminals geöffnet werden kann,
- einer fensterspezifischen OS-MIB (CM) pro geöffnetem Fenster, umfassend Kopien derjenigen Daten der NE-MIB, die in dem geöffneten Fenster dargestellt werden,
mit folgenden Schritten:
- Start eines temporären Synchronisationsprozesses (TP) beim erstmaligen Öffnen eines der Fenster,
- Registrierung jedes geöffneten Fensters in dem Synchronisationsprozess,
- Synchronisation der fensterspezifischen OS-MIB's mit der NE-MIB unter Mitwirkung des Synchronisationsprozesses.

2. Verfahren nach dem vorstehenden Anspruch,
bei dem der Synchronisationsprozess beendet wird, wenn das letzte der geöffneten Fenster wieder geschlossen wird.

3. Verfahren nach einem der vorstehenden Ansprüche,
bei dem von dem Synchronisationsprozess nach dessen Start eine prozessspezifische OS-MIB (SM) geführt wird, die insbesondere an neu registrierte Fenster weitergeleitet wird.

4. Verfahren nach dem vorstehenden Anspruch,
bei dem die prozessspezifische OS-MIB durch wiederholte Abfragen mit der zugehörigen NE-MIB - insbesondere unterstützt durch einen Persistence Check - synchronisiert wird.

5. Verfahren nach dem vorstehenden Anspruch,
bei dem eine Änderung der prozessspezifischen OS-MIB an die fensterspezifischen OS-MIB's verzögert mitgeteilt wird, insbesondere erst dann, wenn bei mehreren, im Anschluss an die Änderung bewirkten Abfragen keine erneute Änderung der NE-MIB festgestellt wird.

6. Verfahren nach dem vorstehenden Anspruch,
bei dem unverzögert mitgeteilt wird, dass die prozessspezifische OS-MIB geändert wurde.

7. Verfahren nach dem vorstehenden Anspruch,
bei dem nach Empfang der unverzögerten Mitteilung in den Fenstern die dargestellten Daten als nicht mehr aktuell **gekennzeichnet** werden.

8. Erzeugnis - insbesondere als Operations System eines TMN System ausgebildete zentrale Steuerung (OS) -, umfassend Mittel, die zur Durchführung der Schritte eines Verfahrens nach einem der vorstehenden Verfahrensansprüche eingerichtet sind.

9. Erzeugnis - insbesondere temporärer Synchronisationsprozess oder Operations System Function, umfassend
- Mittel, die zur Durchführung derjenigen Schritte eines Verfahrens nach einem der vorstehenden Verfahrensansprüche die von dem Erzeugnis bewirkt werden, speziell eingerichtet sind,
- Mittel, die zur Durchführung von gemäß dem Verfahren vorgeschriebenen Wechselwirkungen des Erzeugnisses mit weiteren Erzeugnissen, von denen die restlichen Schritte des Verfahrens durchgeführt werden, eingerichtet sind.

10. Erzeugnis nach einem der beiden vorstehenden Ansprüche, ausgebildet als Computerprogrammprodukt (P), dessen Programmcode zur Durchführung des Verfahrens von zumindest einem Prozessor ausgeführt wird.
